(19) Europäisches Patentamt

European Patent Office

Office européen des brevets

(11) **EP 1 069 554 A1**

(12) **EUROPEAN PATENT APPLICATION**

(43) Date of publication:
**17.01.2001 Bulletin 2001/03**

(51) Int Cl.[7]: **G11B 7/00**, H03L 7/00, H04J 1/00

(21) Application number: **99600019.6**

(22) Date of filing: **18.10.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **06.07.1999 GR 99100230** | (71) Applicant: **Intracom S.A. Hellenic Telecommunications & Electronics Industry**<br>**19002 Peania, Athens (GR)**<br><br>(72) Inventor: **Frantzeskakis, Manolis,**<br>**c/0 Intracom S.A.**<br>**190 02 Peania, Athens (GR)** |

(54) **Low jitter power detector appropiate for time division multiple access communications**

(57)     The present invention concerns a method and an apparatus for extracting a low jitter power detect (PD) signal appropriate for burst data transmission systems. The method is operative in a detector structure which is essentially characterised by a sophisticated thresholding logic producing the PD signal based on the value of a measured power signal and an approximation to the derivative of this signal. An extension of this structure incorporates information of data burst length and guard time in a frame control logic implementing a binary filtering on the PD and controlling the threshold values. A variation of the frame control logic exchanges simple messages with a collision control logic reducing drastically the number of wasted data bursts in communication systems employing asynchronous random access protocols. The invention more particularly applies to wireline and wireless TDMA access systems, to satellite links, and to mobile radio and optical communications.

**FIG. 2**

**Description**

# BACKGROUND OF THE INVENTION

This invention relates to the detection of power in burst data transmission systems such as the time division multiple access (TDMA) communication systems, where low jitter is required for the power detect (PD) signal and the multiple access protocol employed by the transmission system can be an asynchronous one such as the ALOHA protocol.

In wireless continuous transmission systems a receive signal sense indicator (RSSI) represents a quality indicator of the transmission channel. Thresholding of this indicator produces the PD signal, that provides an alarm signal used at the same time to possibly suspend the operation of parameter recovery mechanisms such as clock and carrier recovery. PD time accuracy in such systems is not a crucial issue. In the last few years a large number of wireless communication systems transmitting data in a burst by burst manner have been deployed that include fixed and mobile communication systems within a large spectrum of different modulation formats, topologies, capacities and access protocols. PD time accuracy and more particularly the rising edge of an active-high power detect signal, directly affects the length of the preamble employed by such systems. Consequently minimising the jitter of the PD signal has a direct effect on minimising the data overhead or equivalently the occupied spectrum of the transmitted data. Furthermore, the power detect task must be carried out in an economic way in terms of circuit complexity, so that the low power requirement, ordinary in wireless TDMA systems, will be satisfied.

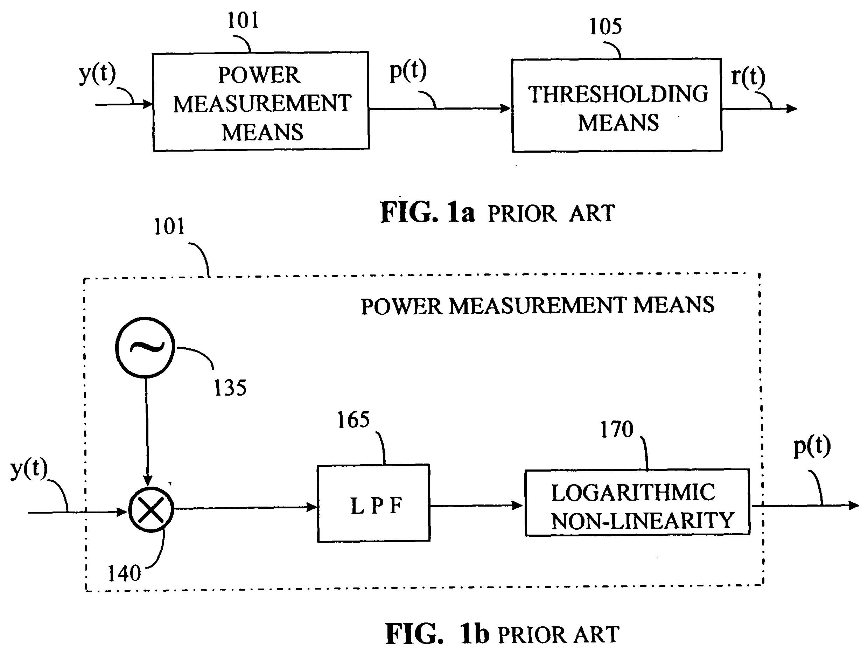

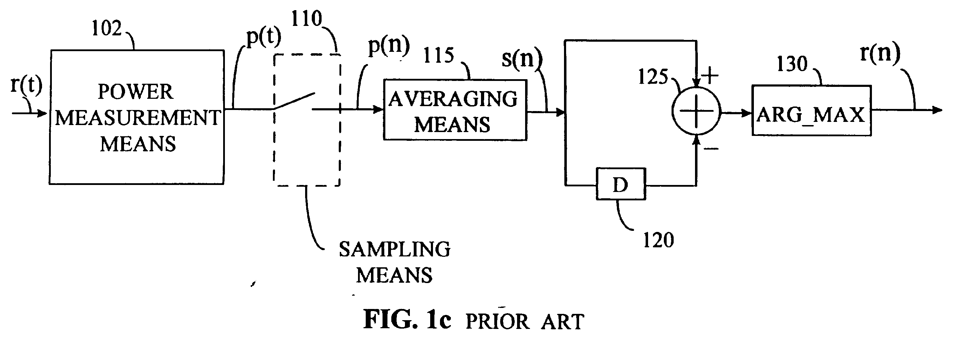

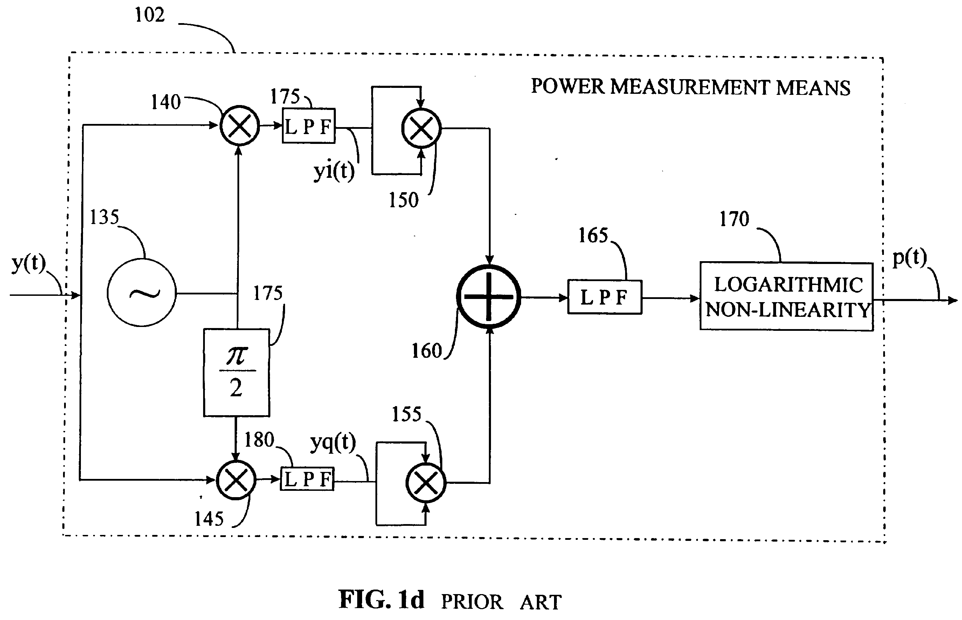

FIG.1a shows a typical prior art power detector structure. Referring to FIG.1a, a modulated carrier signal $y(t)$ feeds a power measurement stage 101 producing an analogue signal $p(t)$ which carries the power information of the received signal in a linear or logarithmic scale. The power detect signal $r(t)$ is produced by comparing signal $p(t)$ to a specified threshold. Referring to FIG.1b, there is shown a specific schematic block diagram for the said processing stage 101 comprising successive steps of frequency down-conversion of the received signal $y(t)$ by mixing with a reference waveform produced by a local oscillator 135, smoothing by a lowpass filter 185 and optionally undergoing a logarithmic rule 170. Designed to generate the PD signal mainly in continuous transmission systems, this approach is not reliable and exhibits high jitter values especially at low SNR conditions or if the amplitude dynamic range of the input signal $y(t)$ is large. A number of different approaches have been adopted in order to enhance reliability: Using sophisticated smoothing filters, performing pattern matching of the measured power signal with reference stored waveforms, or performing a windowing operation on the PD signal based on some expected PD signal (U. S.Pat. No 5280471 issued to Kontou S. and Akahori H.

in 1991). A more efficient power detector structure is suggested in the paper U.Lambrette et al., 1994 (U. Lambrette and H. Meyr, "A Digital Feedforward Differential Detection MSK Receiver for Packet-Based Mobile Radio", Proceedings of the 44th IEEE Vehicular Technology Conference, pp.282-286, 1994), that is shown in FIG.1c. Referring to FIG.1c, a power measurement means 102 produces the signal $p(t)$ carrying the power information. The signal $p(t)$ is sampled, and the sampled power detect signal $r(n)$ is produced by the successive steps of smoothing by an averaging filter 115, delaying the outcome smoothed signal $s(n)$ by a certain number of samples $D$, taking the difference of the signal $s(n)$ and the delayed version of it $s(n-D)$ and forcing the transition of the power detect signal $r(n)$ at the date $n$ if a local maximum occurs in the difference signal $s(n)-s(n-D)$ at date $n$. An illustration of the power measurement means 102 is shown in FIG.1d. The quadrature baseband components $y_i(t)$ and $y_q(t)$ of a received modulated carrier $y(t)$ can be produced by mixing $y(t)$ with the quadrature components of a local oscillator 135 and successive lowpass filtering. The signals $y_i(t)$ and $y_q(t)$ undergo the squaring law 150 and 155 respectively, the squared signals are added together and the resulting signal is filtered by a lowpass filter 165 and transformed by a logarithmic rule 170. The power detector of U.Lambrette et al., 1994, provides reduced PD jitter but still it is sensitive to wide input amplitude range variations. A similar approach is followed in U.S.Pat. No 5621766 issued to Bakke B.B. and Arens J.W. in 1994, wherein the averaging means receives as input a power measurement signal in linear scale and the average extends over the length of one data burst.

# SUMMARY OF THE INVENTION

According to the invention, a method and an apparatus for extracting a low jitter power detect (PD) signal appropriate for burst data transmission systems are presented. An optional mechanism incorporating frame structure information, as well as an optional mechanism for physical layer collision control reduce drastically the number of wasted data bursts in communication systems employing an asynchronous random access protocol such as the ALOHA protocol. More particularly, the invented detector structure is essentially characterised by a sophisticated thresholding logic responsive to a power measurement signal and an approximation to the derivative of this signal producing the PD signal. An extension of this structure incorporates information of data burst length and guard time in a frame control logic implementing a binary filtering on the PD signal and controlling the threshold values. A variation of the frame control logic exchanges simple messages with a collision control logic responsible for detecting the presence of a strong signal during the transmission of a data burst and consequently providing preemptive priority to the reception of this strong signal.

The said power measurement signal is for example the result of processing the receiver input signal by appropriate filters, an optional logarithmic nonlinearity and for the case of wireless transmission system a frequency down-converter or an envelop detector circuit.

The family of power detectors specified above can be tuned to exhibit low jitter output even in low SNR conditions and an input signal amplitude dynamic range exceeding 60dB. Also, in the case of employment of an asynchronous multiple access protocol, if a collision occurs priority is granted to the strongest signal that usually can be demodulated reliably by the receiver data path circuitry. Thus, the number of packets wasted due to collisions can approximately be halfed.

## BRIEF DESCRIPTION OF THE DRAWINGS

The features and advantages of the invention will be more apparent from the detailed description hereunder taken in conjunction with the accompanying drawings, wherein:

FIG.1a    is a schematic block diagram of a prior art power detector;

FIG.1b    is an example of schematic block diagram details of the power measurement means of the power detector referred to in FIG.1a;

FIG.1c    is a schematic block diagram of a prior art power detector for a burst data transmission system;

FIG.1d    is the schematic block diagram details of the power measurement means of the power detector in the burst data transmission system referred to in FIG.1c;

FIG. 2    illustrates an embodiment of a power detector for a burst data transmission system according to the invention;

FIG. 3    illustrates an embodiment of a power detector for a burst data transmission system taking advantage of framing information according to the invention;

FIG. 4    illustrates an embodiment of a power detector for a burst data transmission system taking advantage of framing information and incorporating collision control logic according to the invention;

FIG.5a    is an example of schematic block diagram details of the smoothing filtering means referred to in FIG.2;

FIG.5b    is an example of schematic block diagram details of the absolute derivative means referred to in FIG.2.

## DETAILED DESCRIPTION OF THE PREFERRED EMBODIMENTS

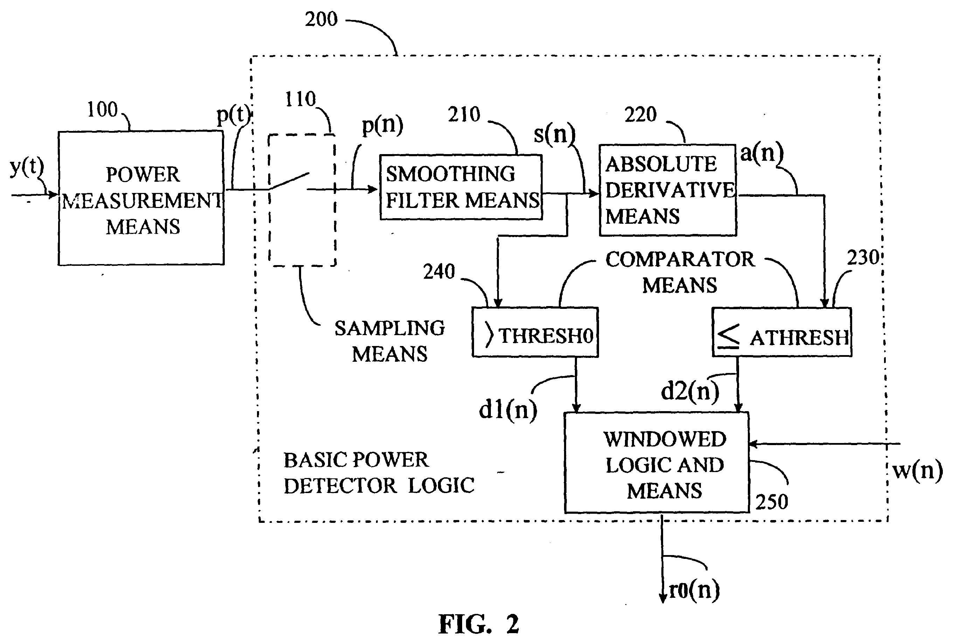

The embodiments described hereunder suggest realisations of the invention as examples without constituting any limitation whatsoever. Referring to FIG. 2, there is shown a specific embodiment of a power detector, the basic power detector logic 200, in accordance with the invention. The power detector 200 accepts a power measurement signal $p(t)$ produced by a power measurement stage 100 processing the receiver input signal $y(t)$. The said input signal $y(t)$ consists of successive data bursts in a communication channel, said data bursts being separated by guard time intervals, where zero signal power has been emitted. The said processing stage 100 can be implemented in different ways as specified for example by prior art FIG.1b and FIG.1d. The signal $p(t)$ undergo sampling at successive dates separated by a time interval $T$, producing the sampled signal $p(n)$. This signal feeds the smoothing filter 210 producing a smoothed signal $s(n)$. A comparator 240 compares the signal $s(n)$ with a threshold $THRESH0$ producing a binary signal $d1(n)$ at each date n. The signal $d1(n)$ takes a value equal to "$1$" at date n if the signal $s(n)$ is larger than $THRESHO$ and equal to "$0$" otherwise. An absolute derivative means 220 estimates the absolute value $a(n)$ of the derivative of signal $s(n)$ at each date n. A comparator 230 compares the signal $a(n)$ with a threshold $ATHRESH$ producing a binary signal $d2(n)$ at each date n, where the signal $d2(n)$ takes a value equal to "$0$" if the signal $a(n)$ is larger than the threshold $A\ THRESH$ and equal to "$1$" otherwise. A windowed logic-and means 250 coupled to receive as input the binary signals $d1(n)$ and $d2(n)$ and a binary signal $w(n)$ produces the power detect signal $r0(n)$ at each date $n$. Assuming an active-high interpretation of the signals $w(n)$ and $r0(n)$, the condition $w(n)=1$ at date n is necessary for allowing a rising edge on the signal $r0(n)$ between the dates $n-1$ and $n$. More particularly, the windowed logic-and means involves an and-gate coupled to receive as inputs the signals $d1(n)$ and $d2(n)$ producing a binary signal $d(n)$ and a windowing function specified by the following truth table:

| $d(n)$ | $w(n)$ | $r0(n)$ |
|---|---|---|
| $0$ | $X$ | $0$ |
| $1$ | $1$ | $1$ |
| $1$ | $0$ | $r0(n-1)$ |

in which "$X$" signifies the don't care condition.

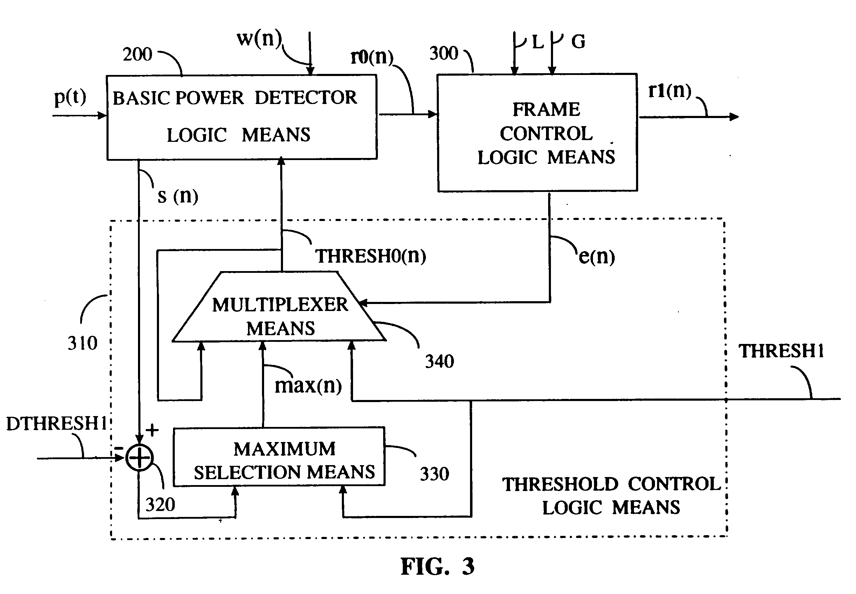

Referring to FIG.3, there is shown another specific embodiment of a power detector in accordance with the invention. This power detector comprises three components: The first one is the basic power detector logic 200 accepting as input a power measurement signal $p(t)$, implementing the processing stages previously described with reference to FIG.2 in order to produce the binary signal $r0(n)$ and the smoothed signal $s(n)$ at successive dates $n$ separated by a time interval $T$, wherein the threshold $THRESHO$ can take a value $THRESHO(n)$ at each date n. The said signal $p(t)$ carries the power content of the receiver input signal $y(t)$, said signal $y(t)$

consisting of successive data bursts in a communication channel, where a data burst extends over $L$ consecutive dates separated by said time interval $T$. These data bursts are separated by guard time intervals, where a guard time interval extends over $G$ consecutive dates. The second one is a frame control logic means 300 performing binary filtering coupled to receive as input the signal $r0(n)$ producing as output a power detect signal $r1(n)$ and two binary control signals $e1(n)$ and $e2(n)$. The signal $r1(n)$ is produced by following the rules below:

a. Force a transition from "$0$" to "$1$" on the output signal $r1(n)$ if the value of the input signal $r0(n)$ at date $n$ is "$1$" and the value of signal $r1(n-1)$ at date $n-1$ is "$0$".
b. Force the value "$1$" to the signal $r1(n+k)$ at the $L-1$ subsequent dates $n+k$, $k=1,2, ...L-1$.
c. Force the value "$0$" to the signal $r1(n+L)$ at date $n+L$.
d. Let the value of signal $r1(n+k)$ be "$0$" at dates $n+k$, $k>L$ if the value of signal $r0(n+k)$ is "$0$".

The said control signal $e1(n)$ takes a value equal to "$1$" at date n if a "$0$" to "$1$" transition is observed on the input signal $r1(n)$ at two consecutive dates $n-1$ and $n$ and it takes a "$0$" value otherwise. The said signal $e2(n)$ takes a value equal to "$1$" at date $n+G$ if a "$1$" to "$0$" transition is observed on the input signal $r1(n)$ at two consecutive dates $n-1$ and $n$ and it takes a "0" value otherwise. The third component is a threshold control logic means 310 coupled to receive as input the smoothed signal $s(n)$ and the said control signals $e1(n)$ and $e2(n)$ producing the said threshold value $THRESHO(n)$ at each date $n$. The threshold control logic means 310 comprises a maximum selection means 330 and a multiplexer means 340, where the maximum selection means 330 computes at each date n the maximum between the value of a threshold $THRESH1$ and the value of the expression $s(n)-DTHRESH1$, where $DTHRESH1$ is the value of certain threshold. The multiplexer means 340 receives as input the resulting signal $max(n)$, along with signals $e1(n)$ and $e2(n)$ and produces the said threshold value $THRESHO(n)$ by setting the value of $THRESHO(n)$ equal to the value of $max(n)$ if the value of $e1(n)$ is "$1$", setting the value of $THRESHO(n)$ equal to the value of threshold $THRESH1$ if the value of $e2(n)$ is "$1$" and maintaining at date $n$ the value of $THRESH0(n-1)$ at date $n-1$ otherwise.

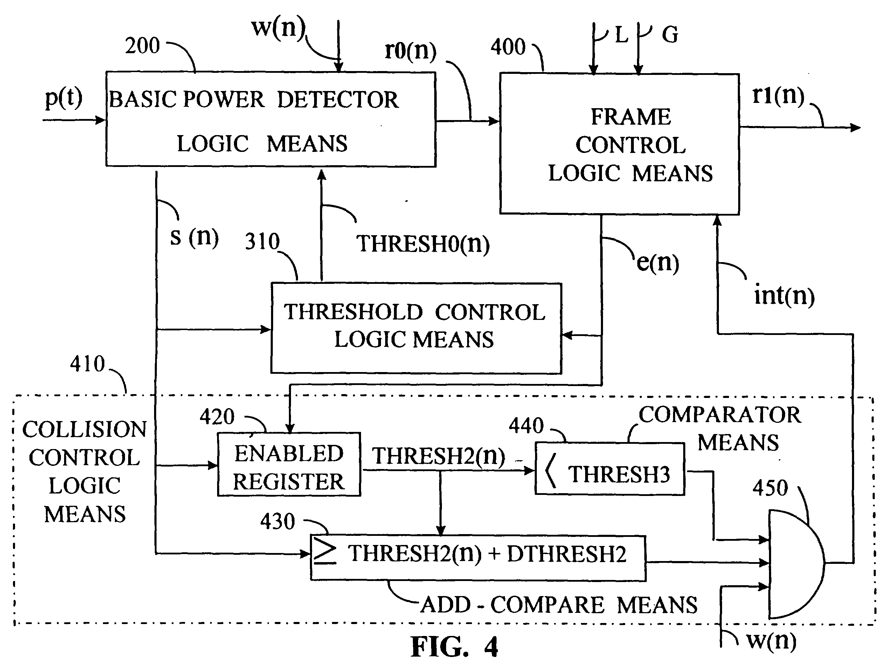

Referring to FIG.4, there is shown another specific embodiment of a power detector in accordance with the invention. This power detector comprises four components: The first one is the Basic Power Detector Logic 200 accepting as input a signal $p(t)$, implementing the processing stages previously described with reference to FIG.2 in order to produce the binary signal $r0(n)$ and the smoothed signal $s(n)$ at successive dates $n$ separated by a time interval $T$, wherein the threshold $THRESHO$ can take a value $THRESHO(n)$ at each date

$n$. The said signal $p(t)$ carries the power content of the receiver input signal $y(t)$, said signal $y(t)$ consisting of successive data bursts in a communication channel, where a data burst extends over $L$ consecutive dates separated by said time interval $T$. These data bursts are separated by guard time intervals, where a guard time interval extends over $G$ consecutive dates. The second one is a frame control logic means 400 performing a binary filtering coupled to receive as input the signal $r0(n)$ and a binary signal $int(n)$ producing as output a power detect signal $rl(n)$ and two binary control signals $e1(n)$ and $e2(n)$. The signal $r1(n)$ is the state label of a two-state finite state machine described as follows:

a. The state is initialised to "0 ".
b. Maintain this zero state as long as the value of the said signal $r0(n)$ is "$0$".
c. Go to state one at date n if the signal $r0(n)$ takes the value "$1$" at that date.
d. Maintain state one for a number of consecutive dates equal to $L$ and successively force the zero state if the said signal $int(n)$ maintains the value "$0$" during these $L$ dates.
e. Force the zero state at date $n$ if the signal $int(n)$ takes the value "$1$" at date $n$.

The control signal $e1(n)$ takes a value equal to "$1$" at date n if a "$0$" to "$1$" transition is observed on the signal $r1(n)$ at two consecutive dates $n-1$ and n and it takes a "$0$" value otherwise. The signal $e2(n)$ takes a value equal to "$1$" at date $n+G$ if a "$1$" to "$0$" transition is observed on the input signal $r1(n)$ at two consecutive dates $n-1$ and $n$ and it takes a "$0$" value otherwise. The third component is a threshold control logic means 310 coupled to receive as input the smoothed signal $s(n)$ and the said control signals $e1(n)$ and $e2(n)$, implementing the processing stages previously described with reference to FIG.3 in order to produce the said threshold $THRESHO(n)$ at each date $n$. The fourth component is a collision control logic means 410 coupled to receive as input the smoothed signal $s(n)$ and the control signal $e1(n)$ producing the said binary signal $int(n)$. The structure in block 410 comprises a register 420 storing the value of the said smoothed signal $s(n)$ at a date $n$ if the value of the signal $el(n)$ at the date $n$ is "$1$" producing the value of a threshold $THRESH2(n)$, a comparator 440 evaluating the logic expression $THRESH2(n) < THRESH3$, an add-compare means 430 evaluating the logic expression $s(n) \geq (THRESH2(n)+DTHRESH2)$ and a three-input and-gate coupled to receive as input the outcomes of the two comparators along with the signal $w(n)$ producing the binary signal $int(n)$, where $THRESH3$ and $DTHRESH2$ are two threshold values.

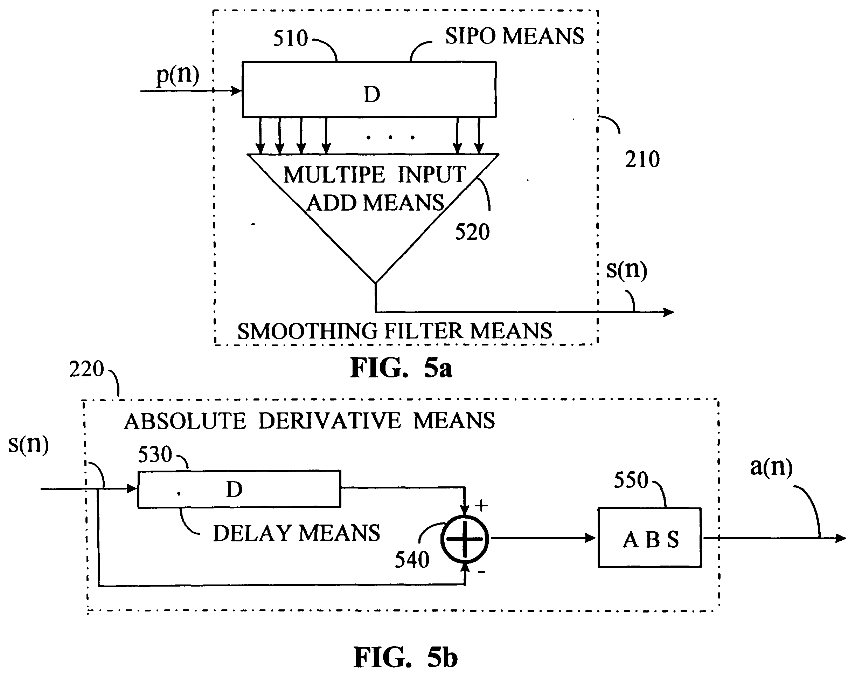

Referring to FIG.5a, a preferred embodiment of the smoothing filter 210 comprises a serial-in parallel-out (SIPO) shift register 510 coupled to receive the said signal $p(k)$ latching out $D$ consecutive samples $p(k)$, $k=n, n-1, ..., n-D+1$ feeding a multiple-input adder 520 producing at each date *n* the average of a number of these *D* consecutive samples. Referring to FIG.5b, the preferred embodiment of the associated absolute derivative means 220 comprises a delay element 530 for delaying the said signal *s(n)* by *D* dates producing the delayed signal *s(n-D)*, a subtractor 540 producing the difference of the input signal *s(n)* and the delayed version *s(n-D)* and absolute value extraction means 550 for evaluating the absolute value *a(n)* of the difference signal *s(n)-s(n-D)* at each date *n*.

## Claims

1. A method for performing low jitter power detection on a power measurement signal *p(t)*, said signal *p(t)* being the result of extracting the power content of a signal *y(t)*, said signal *y(t)* consisting of successive data bursts in a communication channel, said data bursts being separated by guard time intervals, wherein the method is characterised by:

   sampling of the said continuous time signal *p(t)* at successive dates separated by a time interval *T* to obtain a discrete time signal valued *p(n)* at each date *n*;
   digital filtering of the said signal *p(n)* with a lowpass filter to produce the smoothed signal *s(n)*;
   comparing the said signal *s(n)* with a threshold *THRESH0* to produce a binary signal *d1(n)* at each date n, said signal *d1(n)* having value equal to "*1*" at date n if the signal *s(n)* is larger than *THRESH0* and a value equal to "*0*" otherwise;
   estimating the absolute value *a(n)* of the derivative of the said signal *s(n)* at each date *n*;
   comparing the said signal *a(n)* with a threshold *ATHRESH* to produce a binary signal *d2(n)* at each date *n,* said signal *d2(n)* having value equal to "*0*" at date *n* if the signal *a(n)* is larger than a threshold *ATHRESH* and a value equal to "*1*" otherwise;
   processing the said binary signals *d1(n)* and *d2(n)* and a binary signal *w(n)* to produce the received signal sense indicator *r0(n)* at each date *n,* said processing comprises successive steps of anding the said signals *d1(n)* and *d2(n)* to produce the binary signal *d(n)* and applying a window-like binary filtering function specified by the following truth table:

| d(n) | w(n) | r0(n) |
|------|------|-------|
| 0 | X | 0 |
| 1 | 1 | 1 |
| 1 | 0 | r0(n-1) |

   in which "*X*" signifies the don't care condition.

2. A method for performing low jitter power detection on a power measurement signal *p(t)*, said signal *p(t)* being the result of extracting the power content of a signal *y(t)*, said signal *y(t)* consisting of successive data bursts in a communication channel, where a data burst extends over *L* consecutive dates separated by a time interval *T*, said data bursts being separated by guard time intervals, where a guard time interval extends over *G* consecutive dates separated by the said time interval *T*, wherein the method is characterised by:

   processing the signal *p(t)* and a binary signal *w(n)* sampled at successive dates *n* separated by said time interval *T* to extract the binary signal *r0(n)* according to claim 1, wherein the threshold *THRESH0* can take a value *THRESH0(n)* at each date *n*;
   binary filtering accepting as input the said signal *r0(n)* producing as output a power detect signal *r1(n)* by allowing a transition from "*0*" to "*1*" for the said output signal *r1(n)* if the value of the input signal *r0(n)* at date *n* is "*1*" and the value of signal *r1(n-1)* at date *n-1* is "*0*", by forcing the signal *r1(n+k)* to the value "*1*" at the *L-1* subsequent dates n+k, *k=1,2,...L-1*, by forcing the signal *r1(n+L)* to the value "*0*" at date *n+L* and by letting the value of signal *r1(n+k)* be "*0*" at date *n+k, k>L* if the value of signal *r0(n+k)* is "*0*";
   processing the said binary signal *r1(n)* to produce two binary control signals *e1(n)* and *e2(n)* at each date *n*, said signal *e1(n)* has a value equal to "*1*" at date *n* if a "*0*" to "*1*" transition is observed on the signal *r1(n)* at two consecutive dates *n-1* and *n* and it has a "*0*" value otherwise, said signal *e2(n)* has a value equal to "*1*" at date *n+G* if a "*1*" to "*0*" transition is observed on the signal *r1(n)* at two consecutive dates *n-1* and *n* and it has a "*0*" value otherwise;
   computing a signal *max(n)* at each date *n* by selecting the maximum between the value of a threshold *THRESH1* and the value of the expression *s(n)-DTHRESH1*, where *s(n)* is the smoothed signal produced according to claim 1 and *DTHRESH1* is the value of a threshold;
   processing the said signal *max(n)* and the said control signals *e1(n)* and *e2(n)* to produce the said threshold *THRESH0(n)* at each date *n*, said processing comprises setting the value of *THRESH0(n)* equal to the value of *max(n)* if the value of *e1(n)* is "*1*", setting the value of *THRESH0(n)* equal to the value of threshold *THRESH1* if the value of *e2(n)* is "*1*" and maintaining at date *n* the value of *THRESH0(n-1)* at date *n-1* otherwise.

3. A method for performing low jitter power detection on a power measurement signal $p(t)$, said signal $p(t)$ being the result of extracting the power content of a signal $y(t)$, said signal $y(t)$ consisting of successive data bursts in a communication channel, where a data burst extends over $L$ consecutive dates separated by a time interval $T$, said data bursts being separated by guard time intervals, where a guard time interval extends over $G$ consecutive dates separated by the said time interval $T$, able to suppress co-channel burst interferences, wherein the method is characterised by:

processing the signal $p(t)$ and a binary signal $w(n)$ sampled at successive dates $n$ separated by said time interval $T$ to extract the binary signal $r0(n)$ according to claim 1, wherein the threshold $THRESH0$ can take a value $THRESH0(n)$ at each date $n$;
binary filtering accepting as input the said signal $r0(n)$ and a binary signal $int(n)$ producing a power detect signal $r1(n)$ by initialising the said signal $r1(n)$ to a zero state where the value of the signal $r1(n)$ at said zero state is "$0$ ", by maintaining this zero state as long as the value of the said signal $r0(n)$ is "$0$ ", by activating a state one at date n if the signal $r0(n)$ takes the value "$1$" at date $n$, where at said state one the signal $r1(n)$ takes the value "$1$", by maintaining state one for a number of consecutive dates equal to $L$ and successively forcing the zero state if the said signal $int(n)$ maintains the value "$0$" during the $L$ consecutive dates of active state one, and by forcing the zero state at date $n$ if the signal $int(n)$ takes the value "$1$" at date $n$;
processing the said binary signal $r1(n)$ to produce two binary control signals $e1(n)$ and $e2(n)$ at each date $n$ according to claim 2;
processing the smoothed signal $s(n)$ and the control signals $e1(n)$ and $e2(n)$ to compute the value of the threshold $THRESHO(n)$ at each date $n$ according to claim 2;
processing the said smoothed signal $s(n)$, the said signal $w(n)$ and the control signal $e1(n)$ to produce the said binary signal $int(n)$, wherein said processing comprises latching of the value of the said smoothed signal $s(n)$ at a date $n$ if the value of the signal $e1(n)$ at the date $n$ is "$1$" to produce the value of a threshold $THRESH2(n)$, and evaluating the logic expression
$(THRESH2(n) < THRESH3)$ AND $(s(n) \geq (THRESH2(n)+DTHRESH2))$ AND $w(n)$
to produce the binary signal $int(n)$ at each date $n$, where $THRESH3$ and $DTHRESH2$ are two threshold values.

4. A method according to claim 1 or claim 2 or claim 3, in which the digital filtering is characterised by:
averaging at each date $n$ a number of $D$ consecutive samples $p(k)$, $k=n, n-1, ..., n-D+1$, to produce a smoothed sample $s(n)$ and
estimating the absolute value of the derivative is characterised by:
evaluating at each date $n$ the absolute value of the difference of the smoothed signal $s(n)$ and the smoothed signal $s(n-D)$, said signal $s(n-D)$ is a delayed version of signal $s(n)$ by $D$ dates.

5. An apparatus for performing low jitter power detection on a power measurement signal $p(t)$, said signal $p(t)$ being the result of extracting the power content of a signal $y(t)$, said signal $y(t)$ consisting of successive data bursts in a communication channel, said data bursts being separated by guard time intervals, wherein the apparatus is characterised by:

a sampling means coupled to receive as input the said continuous time signal $p(t)$ produces a discrete time signal valued $p(n)$ at successive dates separated by a time interval $T$;
a digital lowpass filter means coupled to receive as input the said signal $p(n)$ produces the smoothed signal $s(n)$;
a comparator means for comparing the said signal $s(n)$ with a threshold $THRESH0$ produces a binary signal $d1(n)$ at each date $n$, said signal $d1(n)$ having value equal to "$1$" at date $n$ if the signal $s(n)$ is larger than $THRESH0$ and a value equal to "$0$" otherwise;
an absolute derivative means for estimating the absolute value $a(n)$ of the derivative of the said signal $s(n)$ at each date $n$;
a comparator means for comparing the said signal $a(n)$ with a threshold $ATHRESH$ produces a binary signal $d2(n)$ at each date $n$, said signal $d2(n)$ having value equal to "$0$" at date $n$ if the signal $a(n)$ is larger than the threshold $ATHRESH$ and a value equal to "I"otherwise;
a windowed logic-and means coupled to receive as input the said binary signals $d1(n)$ and $d2(n)$ and a binary signal $w(n)$ produces the power detect signal $r0(n)$ at each date $n$, said windowed logic-and means comprises an and-gate coupled to receive as inputs the signals $d1(n)$ and $d2(n)$ produces a binary signal $d(n)$ and a windowing function specified by the following truth table:

| $d(n)$ | $w(n)$ | $r0(n)$ |
|---|---|---|
| 0 | X | 0 |
| 1 | 1 | 1 |
| 1 | 0 | $r0(n-1)$ |

in which "$X$" signifies the don't care condition.

6. An apparatus for performing low jitter power detection on a power measurement signal $p(t)$, said signal $p(t)$ being the result of extracting the power content of a signal $y(t)$, said signal $y(t)$ consisting of successive data bursts in a communication channel, where a data burst extends over $L$ consecutive dates separated by a time interval $T$, said data bursts being separated by guard time intervals, where a guard time interval extends over $G$ consecutive dates separated by the said time interval $T$, wherein the apparatus is characterised by:

a basic power detector logic means for processing the signal $p(t)$ and a binary signal $w(n)$ sampled at successive dates n separated by said time interval $T$ to extract the binary signal $r0(n)$ according to claim 5, wherein the threshold $THRESH0$ can take a value $THRESH0(n)$ at each date $n$;
a frame control logic means performing a binary filtering coupled to receive as input the said signal $r0(n)$ produces as output a power detect signal $r1(n)$ and two binary control signals $e1(n)$ and $e2(n)$ said signal $r1(n)$ is produced by allowing a transition from "$0$" to "$1$" for the said output signal $r1(n)$ if the value of the input signal $r0(n)$ at date n is "$1$" and the value of signal $r1(n-1)$ at date $n-1$ is "$0$", by forcing the signal $r1(n+k)$ to the value "$1$" at the $L-1$ subsequent dates n+k, $k=1,2,...L-1,$ by forcing the signal $r1(n+L)$ to the value "0" at date $n+L$ and by letting the value of signal $r1(n+k)$ be "0 " at dates $n+k$, $k>L$ if the value of signal $r0(n+k)$ is "$0$", said control signal $e1(n)$ has a value equal to "$1$" at date $n$ if a "$0$" to "$1$" transition is observed on the input signal $r1(n)$ at two consecutive dates $n-1$ and $n$ and it has a "$0$" value otherwise, said signal $e2(n)$ has a value equal to "$1$" at date $n+G$ if a "$1$" to "$0$" transition is observed on the input signal $r1(n)$ at two consecutive dates $n-1$ and $n$ and it has a "$0$" value otherwise;
a threshold control logic means coupled to receive as input a smoothed signal $s(n)$ and the said control signals $e1(n)$ and $e2(n)$ produces the said threshold $THRESHO(n)$ at each date $n$, said signal $s(n)$ being produced according to claim 5, said threshold control logic means comprising a maximum selection means and a multiplexer means, said maximum selection means computing a signal $max(n)$ at each date $n$ by selecting the maximum between the value of a threshold $THRESH1$ and the value of the expression $s(n)-DTHRESH1$, where $DTHRESH1$ is the value of a threshold, said multiplexer means processing the said signal $max(n)$ and the said control signals $e1(n)$ and $e2(n)$ to produce the said threshold $THRESH0(n)$ at each date $n$, said processing comprises setting the value of $THRESHO(n)$ equal to the value of $max(n)$ if the value of $e1(n)$ is "$1$", setting the value of $THRESHO(n)$ equal to the value of threshold $THRESH1$ if the value of $e2(n)$ is "$1$" and maintaining at date $n$ the value of $THRESH0(n-1)$ at date $n-1$ otherwise.

7. An apparatus for performing low jitter power detection on a power measurement signal $p(t)$, said signal $p(t)$ being the result of extracting the power content of a signal $y(t)$, said signal $y(t)$ consisting of successive data bursts in a communication channel, where a data burst extends over $L$ consecutive dates separated by a time interval $T$, said data bursts being separated by guard time intervals, where a guard time interval extends over $G$ consecutive dates separated by the said time interval $T$, able to suppress co-channel burst interferences, wherein the apparatus is characterised by:

a basic power detector logic means for processing the signal $p(t)$ and a binary signal $w(n)$ sampled at successive dates $n$ separated by said time interval $T$ to extract the binary signal $r0(n)$ according to claim 5, wherein the threshold $THRESH0$ can take a value $THRESH0(n)$ at each date $n$;
a frame control logic means performing a binary filtering coupled to receive as input the said signal $r0(n)$ and a binary signal $int(n)$ produces as output a power detect signal $r1(n)$ and two binary control signals $e1(n)$ and $e2(n)$, said signal $r1(n)$ is produced by initialising the said signal $r1(n)$ to a zero state where the value of the signal $r1(n)$ at said zero state is "0 ", by maintaining this zero state as long as the value of the said signal $r0(n)$ is "$0$", by activating a state one at date $n$ if the signal $r0(n)$ takes the value "$1$" at date $n$, where at said state one the signal $r1(n)$ takes the value "$1$", by maintaining state one for a number of consecutive dates equal to $L$ and successively forcing the zero state if the said signal $int(n)$ maintains the value "$0$" during the $L$ consecutive dates of active state one, and by forcing the zero state at date $n$ if the signal $int(n)$ takes the value "$1$" at date $n$, said control signal $e1(n)$ has a value equal to "$1$" at date $n$ if a "$0$" to "$1$" transition is observed on the signal $r1(n)$ at two consecutive dates $n-1$ and $n$ and it has a "$0$" value otherwise, said signal $e2(n)$ has a value equal to "$1$" at date $n+G$ if a "$1$" to "$0$" transition is observed on the signal $r1(n)$ at two consecutive dates $n-1$ and $n$ and it has a "$0$" value otherwise;
a threshold control logic means coupled to receive as input a smoothed signal $s(n)$ and the said control signals $e1(n)$ and $e2(n)$ produces the said threshold $THRESHO(n)$ at each date $n$ according to claim 6;

a collision control logic means coupled to receive as input the said smoothed signal *s(n)*, the binary signal *w(n)* and the control signal *e1 (n)* produces the said binary signal *int(n)*, said collision control logic means comprises a register storing the value of the said smoothed signal *s(n)* at a date *n* if the value of the signal *e1 (n)* at the date *n* is *"1"* producing the value of a threshold *THRESH2(n),* a comparator evaluating the logic expression

$$THRESH2(n) < THRESH3,$$

an add-compare means coupled to receive as input the signal *s(n)* evaluating the logic expression

$$s(n) \geq (THRESH2(n) + DTHRESH2)$$

and a three-input and-gate coupled to receive as input the outcomes of the two comparators along with the said signal *w(n)* producing the binary signal *int(n)*, where *THRESH3* and *DTHRESH2* are two threshold values.

8. An apparatus according to claim 5 or claim 6 or claim 7, in which the digital lowpass filter means is characterised by:
   an averaging means coupled to receive the said signal *p(k)* extracting at each date *n* the average of a number of *D* consecutive samples *p(k), k=n, n-1, ..., n-D+1*, producing a smoothed sample *s(n)* and
   the absolute derivative means is characterised by:

   means for delaying the said signal *s(n)* by *D* dates producing the delayed signal *s(n-D)* and means for evaluating at each date *n* the absolute value of the difference of the smoothed signal *s(n)* and the said delayed version *s(n-D).*

**FIG. 1a** PRIOR ART

**FIG. 1b** PRIOR ART

EP 1 069 554 A1

**FIG. 1c** PRIOR ART

EP 1 069 554 A1

FIG. 1d  PRIOR ART

FIG. 2

**FIG. 3**

EP 1 069 554 A1

**FIG. 4**

EP 1 069 554 A1

SIPO MEANS

510

p(n)

D

. . .

MULTIPE INPUT
ADD MEANS

520

210

s(n)

SMOOTHING FILTER MEANS

**FIG. 5a**

220

ABSOLUTE DERIVATIVE MEANS

s(n)

530

D

DELAY MEANS

540

+

−

550

ABS

a(n)

**FIG. 5b**

EP 1 069 554 A1

| | European Patent Office | EUROPEAN SEARCH REPORT | Application Number EP 99 60 0019 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 865 035 A (HITACHI LTD) 16 September 1998 (1998-09-16) * abstract * * column 5, line 8 - line 57 * * figure 1 * | 1-3,5-7 | G11B7/00 H03L7/00 H04J1/00 |
| A | US 5 373 255 A (BRAY JEFFREY P ET AL) 13 December 1994 (1994-12-13) * abstract * * page 4, line 9 - line 50 * * claim 1 * | 1-3,5-7 | |
| A | EP 0 405 610 A (MATSUSHITA ELECTRIC IND CO LTD) 2 January 1991 (1991-01-02) * abstract * * column 2, line 6 - line 46 * * claim 1 * | 1-3,5-7 | |
| A | US 5 905 767 A (FUJIMURA AKINORI) 18 May 1999 (1999-05-18) * abstract * * column 9, line 47 - column 18, line 59 * | 1-3,5-7 | TECHNICAL FIELDS SEARCHED (Int.Cl.7) G11B H03L H04J H04L |

The present search report has been drawn up for all claims

| Place of search | Date of completion of the search | Examiner |
|---|---|---|
| THE HAGUE | 25 October 2000 | López Márquez, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.**                    EP 99 60 0019

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2000

| Patent document cited in search report | | Publication date | Patent family member(s) | | Publication date |
|---|---|---|---|---|---|
| EP 0865035 | A | 16-09-1998 | EP 1033704 A | | 06-09-2000 |
| | | | JP 10320777 A | | 04-12-1998 |
| US 5373255 | A | 13-12-1994 | EP 0637137 A | | 01-02-1995 |
| | | | JP 7095060 A | | 07-04-1995 |
| EP 0405610 | A | 02-01-1991 | JP 2658404 B | | 30-09-1997 |
| | | | JP 3035425 A | | 15-02-1991 |
| | | | JP 2707774 B | | 04-02-1998 |
| | | | JP 3185628 A | | 13-08-1991 |
| | | | CA 2020243 A,C | | 31-12-1990 |
| | | | DE 69028737 D | | 07-11-1996 |
| | | | DE 69028737 T | | 22-05-1997 |
| | | | DE 69032775 D | | 24-12-1998 |
| | | | DE 69032775 T | | 22-07-1999 |
| | | | EP 0669611 A | | 30-08-1995 |
| | | | KR 9401997 B | | 12-03-1994 |
| | | | US 5109373 A | | 28-04-1992 |
| | | | US 5150351 A | | 22-09-1992 |
| US 5905767 | A | 18-05-1999 | JP 9135276 A | | 20-05-1997 |
| | | | GB 2307154 A,B | | 14-05-1997 |
| | | | GB 2317541 A,B | | 25-03-1998 |
| | | | US 6104762 A | | 15-08-2000 |

For more details about this annex : see Official Journal of the European Patent Office, No. 12/82